## Europäisches Patentamt
## European Patent Office
## Office européen des brevets

(11) Numéro de publication: **0 017 588**
**B1**

(12) **FASCICULE DE BREVET EUROPEEN**

(45) Date de publication du fascicule du brevet: **09.02.83**

(21) Numéro de dépôt: **80400443.0**

(22) Date de dépôt: **02.04.80**

(51) Int. Cl.³: **B 03 C 1/24, B 03 C 1/02, B 03 C 1/00, B 03 C 1/28, B 03 C 1/30, B 03 C 5/00, B 03 C 5/02**

(54) Dispositif électromagnétique de séparation d'inclusions contenues dans un fluide électriquement conducteur.

(30) Priorité: **04.04.79 FR 7908503**

(43) Date de publication de la demande:
**15.10.80 Bulletin 80/21**

(45) Mention de la délivrance du brevet:
**09.02.83 Bulletin 83/6**

(84) Etats contractants désignés:
**AT BE DE GB IT LU NL SE**

(56) Documents cités:
**CH - A - 562 631**
**FR - A - 1 409 003**

(73) Titulaire: **COMMISSARIAT A L'ENERGIE ATOMIQUE Etablissement de Caractère Scientifique Technique et Industriel B.P. 510 F-75752 Paris Cedex 15 (FR)**
(73) Titulaire: **ANVAR Agence Nationale de Valorisation de la Recherche 13, rue Madeleine Michelis F-92522 Neuilly-sur-Seine (FR)**

(72) Inventeur: **Alemany, Antoine**
**Le Bouloud, Saint Martin d'Uriage**
**F-38410 Uriage (FR)**
Inventeur: **Argous, Jean-Paul**
**La Pinède**
**F-04100 Pierrevert (FR)**
Inventeur: **Barbet, Jean**
**16, rue Trident**
**F-38100 Grenoble (FR)**
Inventeur: **Ivanes, Marcel**
**11, Avenue du Vercors**
**F-38240 Meylan (FR)**
Inventeur: **Moreau, René**
**Le cèdre, Faubourg Sermorens**
**F-30500 Voiron (FR)**
Inventeur: **Poinsot, Serge**
**67, rue du Moulin à Huile**
**F-84120 Pertuis (FR)**

Courier Press, Leamington Spa, England.

**0 017 588**

(74) Mandataire: **Mongrédien, André et al,**
**c/o Brevatome 25, rue de Ponthieu**
**F-75008 Paris (FR)**

2

Dispositif électromagnétique de séparation d'inclusions contenues dans un fluide électriquement conducteur

L'invention concerne un dispositif électromagnétique de séparation d'inclusions contenues dans un fluide électriquement conducteur circulant dans un circuit, les inclusions présentant une conductivité électrique différente de celle du fluide, ce dispositif comprenant des premiers moyens pour créer un champ magnétique sensiblement perpendiculaire à la direction d'écoulement du fluide et des seconds moyens pour créer un courant électrique circulant dans le fluide selon une direction sensiblement perpendiculaire au champ magnétique. Ce dispositif est connu du document FR—A—1409003.

Dans toute la suite de l'exposé, le terme "inclusions" doit être entendu comme signifiant des particules solides et/ou liquides et/ou des bulles gazeuses contenues dans ledit fluide.

Le dispositif électromagnétique objet de l'invention, permet, selon les cas d'utilisation, de séparer les inclusions ou de séparer une fraction de fluide enrichie en ces inclusions.

On sait qu'en créant à l'intérieur d'un domaine fluide un champ magnétique $\vec{B}$ et des courants électriques, de densité $\vec{J}$, circulant dans le fluide selon une direction perpendiculaire à celle du champ magnétique $\vec{B}$, toute unité de masse du fluide subit une force électromagnétique $\vec{G}$ inversement proportionnelle à la masse volumique de ce fluide. Cette force électromagnétique est équilibrée dans une direction perpendiculaire aux parois par la force de pression appliquée à chaque unité de masse du fluide. Si l'on considère dans ce domaine fluide une inclusion isolée, de conductivité électrique différente de celle du fluide qui la contient, cette inclusion est soumise à la fois au gradient de pression local et à une force électromagnétique. Cette force électromagnétique est proportionnelle au courant électrique qui traverse l'inclusion, et ce courant est lui-même proportionnel à le conductivité électrique propre de l'inclusion, de telle sorte que la résultante des forces appliquées à cette inclusion selon une direction perpendiculaire aux parois est donnée par la formule suivante:

$$\vec{R} = \rho \, \vec{G} \, v \frac{\sigma^x}{\sigma} - 1$$

où v désigne le volume de l'inclusion,
$\rho$ la masse volumique du fluide,
$\sigma$ la conductivité électrique du fluide, et
$\sigma^x$ la conductivité électrique de l'inclusion.

L'inclusion se déplace donc à l'intérieur du fluide dans le sens de la force électromagné-tique $\vec{G}$ appliquée à ce dernier ou en sens inverse selon que la conductivité électrique propre de l'inclusion considérée est inférieure ou supérieure à la conductivité électrique du fluide. Ainsi, dans le cas de particules isolantes noyées dans un fluide conducteur tel qu'un métal liquide, la résultante $\vec{R}$ das forces appliquées à ces particules entraîne un déplacement de celles-ci en direction opposée par rapport à la force électromagnétique $\vec{G}$ appliquée au liquide.

On a déjà proposé d'utiliser ce principe pour séparer des inclusions contenues dans un fluide tel qu'un métal liquide circulant dans un circuit. A cet effet, deux électrodes ont été mises en contact avec le métal liquide afin de créer à l'intérieur de celui-ci un courant électrique circulant selon une direction parallèle à la direction d'écoulement du métal liquide. Le métal liquide était par ailleurs soumis à un champ magnétique créé par exemple au moyen d'un électroaimant disposé de telle sorte que le champ magnétique soit perpendiculaire à la direction d'écoulement du métal liquide. Un tel dispositif permet d'appliquer sur les particules d'inclusions des forces dont la résultante $\vec{R}$ est perpendiculaire à la direction d'écoulement du métal liquide, de telle sorte que ces particules peuvent être séparées aisément du fluide qui les contient. Cependant, de tels dispositifs deviennent pratiquement inutilisables lorsque le métal liquide est trop corrosif, en raison de la dégradation rapide des électrodes. A titre d'exemples non limitatifs d'application du dispositif, on peut citer la purification de métaux liquides et la séparation du gaz contenu dans le sodium liquide utilisé comme fluide de refroidissement dans un réacteur nuclaire, cette séparation pouvant servir à la mesure du taux de gaz contenu dans le sodium.

L'invention a pour objet un dispositif électromagnétique de séparation d'inclusions, contenus dans un fluide électriquement conducteur utilisant le principe qui vient d'être exposé et dont l'application est particulièrement adaptée, bien que non limitée, au cas où le fluide est trop corrosif pour permettre l'utilisation des dispositifs à électrodes connus.

Dans ce but le dispositif connu cité au début est perfectionné en ce que les seconds moyens comprennent au moins un transformateur dont le secondaire est constitué par le fluide circulant dans une partie du circuit en forme de boucle fermée.

Grâce à un tel dispositif, les courants électriques sont créés dans le fluide par induction, de telle sorte qu'aucun contact électrique n'est nécessaire à l'intérieur du circuit dans lequel circule le fluide.

Conformément à un premier mode de réalisation de l'invention, le circuit dans lequel circule le fluide comprend sur une partie de sa longueur deux conduites réunies en amount et en aval pour constituer ladite partie en forme de boucle fermée. Dans ce cas, les premiers moyens pour créer un champ magnétique comprennent, par exemple, au moins un électroaimant entourant chacune des conduites.

Conformément à un second mode de réalisation de l'invention, le circuit dans lequel circule le fluide comprend sur une partie de sa longueur deux conduites qui débouchent en amont à la base d'un réservoir, les conduites étant réunies en aval pour constituer avec le réservoir ladite partie en forme de boucle fermée. Dans ce cas, les conduites peuvent être réunies en aval par une troisième conduite raccordée au reste du circuit, les premiers moyens pour créer un champ magnétique comprenant alors un électroaimant entourant la troisième conduite au niveau où elle est raccordée au reste du circuit.

Dans chacun des modes de réalisation de l'invention, un enroulement primaire de transformateur peut être disposé autour d'au moins l'une des conduites, de façon à induire dans le fluide une densité de courant électrique se refermant dans la partie en forme de boucle fermée.

Conformément à une caractéristique secondaire de l'invention, la circulation du fluide est commandée au moins en partie par la force électromagnétique résultant de l'action combinée du champ magnétique et du courant électrique.

Selon encore une autre caractéristique secondaire de l'invention, le circuit comprend au moins une dérivation destinée à évacuer les inclusions, cette dérivation étant disposée dans la partie en forme de boucle fermée au niveau des premiers moyens pour créer un champ magnétique.

Selon une variante de l'invention, la dérivation peut alors déboucher dans un récipient amovible, de telle sorte que le prélèvement des inclusions se fait alors de façon discontinue.

On décrira maintenant, à titre d'exemple non limitatif, deux modes de réalisation particuliers de l'invention en se référant aux dessins annexés dans lesquels:

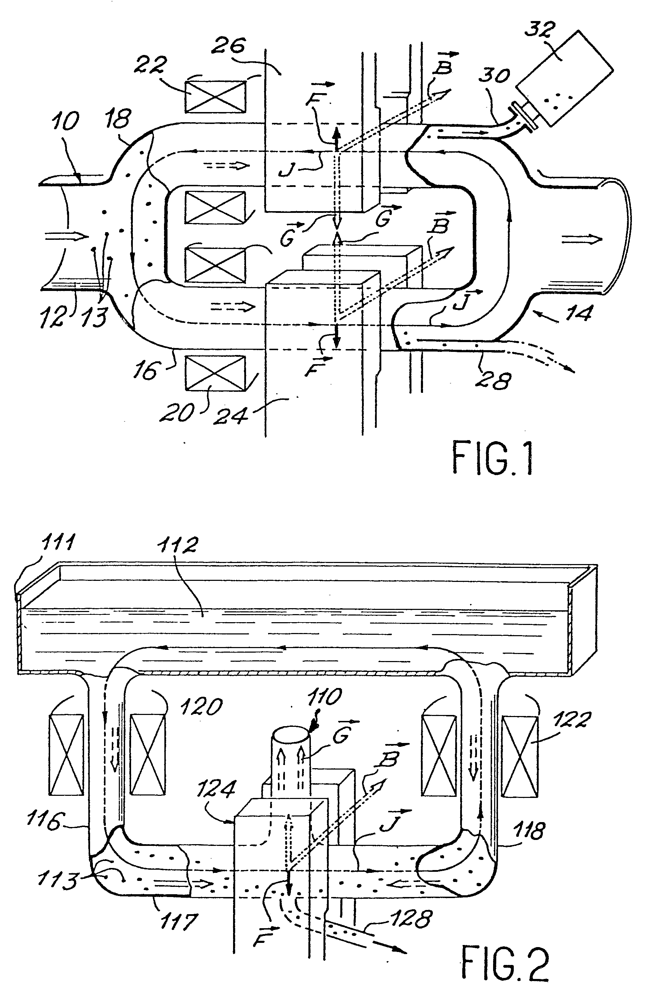

—la figure 1 représente de façon schématique une partie d'un circuit dans lequel circule un fluide électriquement conducteur, ce circuit comprenant deux conduites réunies en amont et en aval pour former une boucle fermée à l'intérieur de laquelle le fluide forme une spire constituant le secondaire d'un transformateur au moyen duquel un courant électrique est créé par induction et permet, en combinaison avec un champ magnétique qui lui est perpendiculaire, d'assurer la séparation des inclusions contenues dans le fluide, et

—la figure 2 représente de façon schématique un autre mode de réalisation de l'invention dans lequel la partie du circuit en forme de boucle fermée comprend deux conduites qui débouchent en amont à la base d'un réservoir et qui sont réunies en aval où elles communiquent avec le reste du circuit.

La figure 1 représente une partie d'un circuit 10 dans lequel circule un fluide électriquement conducteur 12 contenant des inclusions 13 que l'on veut séparer.

Dans ce but, conformément à l'invention, le circuit 10 comprend une partie en forme de boucle fermée 14 constituée par deux conduites 16 et 18 réunies en amont et en aval pour communiquer avec le reste du circuit et autour desquelles sont disposés des enroulements primaires 20 et 22 dont le secondaire est constitué par la spire de métal liquide 12 circulant dans la boucle fermée définie par les conduites 16 et 18. Lorsqu'ils sont mis sous tension, les enroulements primaires 20 et 22 créent un courant induit de densité $\vec{J}$ dans la partie en forme de boucle fermée ainsi définie dans le circuit 10. En outre, deux électroaimants 24 et 26 sont disposés respectivement dans chacune des conduites 16 et 18 de façon à créer à l'intérieur de celles-ci un champ magnétique $\vec{B}$ sensiblement perpendiculaire à la direction d'écoulement du métal liquide 12. Etant donné que le courant électrique de densité $\vec{J}$ induit dans la boucle fermée définie par le métal liquide 12 à l'intérieur des conduites 16 et 18 circule au niveau des électroaimants 24 et 26 selon une direction sensiblement parallèle à la direction d'écoulement du métal liquide 12, et donc perpendiculaire au champ magnétique B, une force électromagnétique $\vec{G}$ est appliquée selon une direction perpendiculaire, à la fois au champ magnétique $\vec{B}$ et à la direction d'écoulement du métal liquide 12 à chaque unité de masse de ce métal. Cette force $\vec{G}$ étant équilibrée par la résultante des forces de pression dues notamment à la proximité des parois de la conduite a peu de conséquences sur l'écoulement du métal liquide. Par contre, toute inclusion véhiculée par le métal liquide et présentant une conductivité électrique différente de celle de ce métal est soumise simultanément au gradient de pression local et à une force électromagnétique proportionnelle au courant électrique qui la traverse et à sa conductivité électrique propre. La résultante $\vec{R}$ des forces appliquées à cette particule, sans tenir compte de la force d'entraînement exercée par le métal liquide en mouvement, a donc pour effet de déplacer cette inclusion dans le sens de la force magnétique $\vec{G}$ si la conductivité électrique de l'inclusion est supérieure à celle du métal liquide, ou bien dans le sens inverse, si la conductivité électrique de l'inclusion est inférieure à celle du métal liquide, c'est-à-dire s'il s'agit d'inclusions isolantes. Dans l'exemple donné, on se trouve dans cette seconde hypothèse et la resultante $\vec{R}$ est donc dirigée en sens inverse de la force électromagnétique G.

Sous l'effet de la force résultante $\vec{R}$ ainsi appliquée à chacune des inclusions isolantes véhiculées par le métal liquide 12 et de la force d'entraînement exercée par ce métal sur les inclusions, celles-ci suivent une trajectoire déviée par rapport à la direction d'écoulement du métal liquide et se déplacent vers la paroi des conduites 16 et 18 dans une direction

opposée à celle de la force électromagnétique $\vec{G}$.

Afin de séparer les inclusions du métal liquide 12, on a représenté sur la figure 1 deux variantes permettant d'effectuer une évacuation, soit en continu, soit de façon discontinue.

Le dispositif, selon la première variante, permettent l'évacuation en continu des inclusions contenues dans le métal liquide 12 est illustré sur la conduite 16. Il comprend une dérivation 28 dont lu partie débouchant dans la conduite 16 est disposée et orientée de façon appropriée en tenant compte à la fois de la force d'entraînement exercée par le métal liquide 12 sur les inclusions, c'est-à-dire du débit et de la température du métal et de la résultante $\vec{R}$ des forces exercées sur les inclusions au moyen du dispositif selon l'invention, c'est-à-dire des conductivités respectives du métal et des inclusions et des valeurs du courant électrique et du champ magnétique. L'autre extrémité de la dérivation 28 est raccordée à un circuit annexe (non représenté) tel que, par exemple, un circuit permettant de retraiter la faible quantité de métal liquide fortement chargé en inclusions évacuée par cette dérivation.

Dans la seconde variante représentée sur la conduite 18, une dérivation 30 débouche également dans cette conduite à proximité de la paroi de celle-ci en un emplacement et selon une orientation définis préalablement en tenant compte du sens de l'écoulement du métal 12 et des différentes forces appliquées aux inclusions véhiculées par ce métal. Afin de permettre une récupération discontinue des impuretés ainsi séparées du métal liquide, l'autre extrémité de la dérivation 30 reçoit un récipient 32 destiné à être remplacé régulièrement par un récipient vide lorsqu'il est suffisamment rempli.

Dans le mode de réalisation représenté sur la figure 2, le circuit dans lequel circule le métal liquide comprend un réservoir 111 à la base duquel débouchent deux conduites 116 et 118 réunies en aval par une troisième conduite 117 par laquelle les conduites 116 et 118 sont raccordées au reste du circuit 110. Comme dans le mode de réalisation représenté sur la figure 1, un métal liquide 112 circule dans le circuit 110 à partir du réservoir 111 et véhicule des inclusions 113.

Comme dans le mode de réalisation précédent, ces inclusions sont séparées du métal liquide en créant à l'intérieur d'une partie de celui-ci un courant électrique induit de densité $\vec{J}$ circulant dans une direction parallèle à la direction d'écoulement du métal et en créant un champ magnétique $\vec{B}$ perpendiculaire à ce courant, de façon à soumettre les inclusions isolantes véhiculées par le métal liquide à une force résultante radiale $\vec{R}$ tendant à rapprocher les inclusions de la paroi de la conduite en direction opposée de la force électromagnétique $\vec{G}$ appliquée au métal liquide. Dans le mode de réalisation représenté sur la figure 2, le métal liquide contenu dans le réservoir 111 et dans les branches 116, 117 et 118 définit une boucle fermée constituant le secondaire de deux transformateurs dont les enroulements primaires 120 et 122 sont disposés respectivement autour des conduites 116 et 118. Un courant électrique de densité $\vec{J}$ est donc induit dans la partie en forme de boucle fermée ainsi définie dans le circuit 110 et circule dans les conduites 116, 117 et 118 parallèlement à la direction d'écoulement du métal liquide 112. Comme l'illustre la figure 2, un électroaimant 124 est disposé autour de la conduite 117 au niveau de son raccordement avec le reste du circuit 110, de façon à créer un champ magnétique $\vec{B}$ perpendiculaire à la densité de courant électrique $\vec{J}$. Le courant électrique de densité $\vec{J}$ et le champ magnétique $\vec{B}$, perpendiculaires entre eux, engendrent une force électromagnétique $\vec{G}$ perpendiculaire au courant électrique et au champ magnétique. Comme il a été mentionné précédemment, les inclusions véhiculées par le métal liquide 112 sont soumises à une force résultante $\vec{R}$, opposée à la force électromagnétique $\vec{G}$ lorsqu'il s'agit d'inclusions isolantes. En conséquence, une dérivation 128 est prévue dans la conduite 117 au niveau de l'électroaimant 124 pour permettre l'évacuation de ces inclusions soit en continu, soit de façon discontinue.

Dans le mode de réalisation représenté sur la figure 2, le raccordement du circuit 110 sur la conduite 117 est disposé à angle droit par rapport à cette dernière et dans le prolongement de la dérivation 128, de telle sorte que le métal liquide 112 soit soumis dans l'entrefer de l'électroaimant 124 à la force électromagnétique G et au gradient de pression engendré par les pertes de charge dans le circuit 110 et, éventuellement, si le circuit est vertical, par le poids du liquide au-dessus de la conduite 117. La force électromagnétique peut suivant cette relation être utilisée comme force motrice de l'écoulement. Le dispositif selon l'invention peut ainsi être utilisé simultanément pour séparer les inclusions du métal liquide 112 et pour assurer la circulation de ce dernier dans le circuit 110 à partir du réservoir 112. Le dispositif selon l'invention joue alors le rôle de pompe électromagnétique et assure, seul ou en combinaison avec une ou plusieurs autres pompes, la circulation du métal liquide.

Il est intéressant de noter qu'en raison de l'énergie produite par effet Joule dans la boucle de métal liquide, dans les deux modes de réalisation qui viennent d'être décrits, le métal liquide peut être réchauffé ou maintenu à toute température désirée.

Le dispositif selon l'invention peut également remplir la fonction de pompe électromagnétique permettant d'assurer la circulation du métal liquide à l'intérieur du circuit dans un mode de réalisation voisin de celui qui est représenté sur la figure 1. Ainsi, les électroaimants 24 et 26 peuvent être remplacés par un électroaimant unique disposé au niveau du raccordement aval des conduits 16 et 18 avec le circuit 10, les dérivations 28 et 30 étant alors remplacées par une dérivation unique disposée dans le prolongement du reste du circuit 10.

## Revendications

1. Dispositif électromagnétique de séparation d'inclusions contenues dans un fluide électriquement conducteur (12, 112) circulant dans un circuit (10, 110), les inclusions (13, 113) présentant une conductivité électrique différente de celle du fluide, ce dispositif comprenant des premiers moyens (24, 26, 124) pour créer un champ magnétique (B̅) sensiblement perpendiculaire à la direction d'écoulement du fluide et des seconds moyens (20, 22, 120, 122) pour créer un courant électrique (J̅) circulant dans le fluide selon une direction sensiblement perpendiculaire au champ magnétique, caractérisé en ce que les seconds moyens comprennent au moins un transformateur (20, 22, 120, 122) dont le secondaire est constitué par le fluide (12, 112) circulant dans une partie du circuit en forme de boucle fermée (14, 111, 116, 117, 118).

2. Dispositif selon la revendication 1, caractérisé en ce que le circuit (10) dans lequel circule le fluide (12) comprend sur une partie de sa longueur deux conduites (16, 18) réunies en amont et en aval pour constituer ladite partie en forme de boucle fermée (14).

3. Dispositif selon la revendication 2, caractérisé en ce que les premiers moyens pour créer un champ magnétique comprennent au moins un électroaimant (24, 26) entourant chacune des conduites (16, 18).

4. Dispositif selon la revendication 1, caractérisé en ce que le circuit (110) dans lequel circule le fluide (112) comprend sur une partie de sa longueur deux conduites (116, 118) qui débouchent en amont à la base d'un réservoir (111), les conduites étant réunies en aval pour constituer avec le réservoir ladite partie en forme de boucle fermée.

5. Dispositif selon la revendication 4, caractérisé en ce que les conduites (116, 118) sont réunies en aval par une troisième conduite raccordée au reste du circuit (110) et en ce que les premiers moyens pour créer un champ magnétique comprennent un électroaimant (124) entourant la troisième conduite au niveau où elle est raccordée au reste du circuit.

6. Dispositif selon l'une quelconque des revendications 2 à 5, caractérisé en ce qu'un enroulement primaire de transformateur (20, 22, 120, 122) est disposé autour d'au moins l'une des conduites (16, 18, 116, 118), de façon à induire dans le fluide (12, 112) une densité de courant électrique (J̅) se refermant dans la partie en forme de boucle fermée.

7. Dispositif selon l'une quelconque des revendications précédentes, caractérisé en ce que la circulation du fluide est commandée au moins en partie par la force électromagnétique (G̅) résultant de l'action combinée du champ magnétique (B̅) et du courant électrique (J̅).

8. Dispositif selon l'une quelconque des revendications précédentes, caractérisé en ce que le circuit comprend au moins une dérivation (28, 30, 128) destinée à évacuer les inclusions (13, 113), cette dérivation étant disposée dans la partie en forme de boucle fermée au niveau des premiers moyens (24, 26, 124) pour créer un champ magnétique (B̅).

9. Dispositif selon la revendication 8, caractérisé en ce que la dérivation (28, 30, 128) débouche dans un récipient amovible (32).

## Patentansprüche

1. Elektromagnetische Vorrichtung zum Abtrennen von Einschlüssen, die in einem elektrisch leitfähigen Fluid (12, 112) enthalten sind, welches in einem Strömungspfad (10, 110) strömt, wobei die Einschlüsse (13, 113) eine von der elektrischen Leitfähigkeit des Fluids unterschiedliche Leitfähigkeit aufweisen und die Vorrichtung erste Mittel (24, 26, 124), durch die ein im wesentlichen zur Strömungsrichtung des Fluids senkrechtes Magnetfeld (B̅) erzeugbar ist, und zweite Mittel (20, 22, 120, 122) umfaßt, durch die ein in dem Fluid in einer im wesentlichen zu dem Magnetfeld senkrechten Richtung fließender, elektrischer Strom (J̅) erzeugbar ist, dadurch gekennzeichnet, daß die zweiten Mittel wenigstens einen Transformator (20, 22, 121, 122) umfassen, dessen Sekundärseite von dem Fluid (12, 112) gebildet ist, welches in einem Teil des Strömungspfades in Form einer geschlossenen Schleife (14, 111, 116, 117, 118) strömt.

2. Vorrichtung nach Anspruch 1, dadurch gekennzeichnet, daß der Strömungspfad (10), in dem das Fluid (12) strömt, über einen Teil seiner Länge zwei Leitungen (16, 18) aufweist, die stromaufwärts und stromabwärts vereinigt sind, um den Teil in Form der geschlossenen Schleife (14) zu bilden.

3. Verrichtung nach Anspruch 2, dadurch gekennzeichnet, daß die ersten Mittel zur Erzeugung eines Magnetfeldes wenigstens einen Elektromagneten (24, 26) umfassen, der jede der Leitungen (16, 18) umgibt.

4. Vorrichtung nach Anspruch 1, dadurch gekennzeichnet, daß der Strömungspfad (110), in dem das Fluid (112) strömt, über einen Teil seiner Länge zwei Leitungen (116, 118) aufweist, welche stromaufwärts in dem Boden eines Behälters (111) münden, und daß die Leitungen stromabwärts vereinigt sind, um mit dem Behälter den Teil in der Form der geschlossenen Schleife zu bilden.

5. Vorrichtung nach Anspruch 4, dadurch gekennzeichnet, daß die Leitungen (116, 118) stromabwärts durch eine dritte Leitung vereinigt sind, die an dem übrigen Teil des Strömungspfades (110) angeschlossen ist, und daß die ersten Mittel zur Erzeugung eines Magnetfeldes einen Elektromagneten (124) umfassen, welcher die dritte Leitung auf der Höhe umgibt, wo sie mit dem übrigen Teil des Strömungspfades verbunden ist.

6. Vorrichtung nach irgendeinem der Ansprüche 2 bis 5, dadurch gekennzeichnet, daß eine Primärwicklung des Transformators (20, 22, 120, 122) um wenigstens eine der Leitungen (16, 18, 116, 118) herum derart angeordnet ist, daß in dem Fluid (12, 112) eine elektrische Stromdichte ($\vec{J}$) erzeugt wird, die sich wieder in dem Teil in Form der geschlossenen Schleife schließt.

7. Vorrichtung nach irgendeinem der vorhergehenden Ansprüche, dadurch gekennzeichnet, daß die Strömung des Fluids wenigstens teilweise durch die elektromagnetische Kraft ($\vec{G}$) gesteuert ist, welche von der kombinierten Wirkung des Magnetfeldes ($\vec{B}$) und des elektrischen Stromes ($\vec{J}$) herrührt.

8. Vorrichtung nach irgendeinem der vorhergehenden Ansprüche, dadurch gekennzeichnet, daß der Strömungspfad wenigstens eine Ableitung (28, 30, 126) zum Entfernen der Einschlüsse (13, 113) umfaßt, wobei diese Ableitung in dem Teil in Form der geschlossenen Schleife auf der Höhe der ersten Mittel (24, 26, 124) angeordnet ist, um ein Magnetfeld ($\vec{B}$) zu erzeugen.

9. Vorrichtung nach Anspruch 8, dadurch gekennzeichnet, daß die Ableitung (28, 30, 128) in einem entfernbaren Auffänger (32) mündet.

## Claims

1. Electromagnetic apparatus for separating inclusions contained in an electrically-conductive fluid (12, 112) circulating in a circuit (10, 110), the inclusions (13, 113) having an electrical conductivity different from that of the fluid, said apparatus comprising first means (24, 26, 124) for providing a magnetic field ($\vec{B}$) substantially perpendicular to the direction of fluid flow, and second means (20, 22, 120, 122) for providing an electrical current ($\vec{J}$) circulating through the fluid in a direction substantially perpendicular to the magnetic field, characterized in that the second means comprise at least one transformer (20, 22, 120, 122) whose secondary is constituted by the fluid (12, 112) circulating in a part of the circuit in the form of a closed loop (14, 111, 116, 117, 118).

2. Apparatus according to Claim 1 characterized in that the circuit (10) in which the fluid (12) circulates comprises, over a part of its length, two conduits (16, 18) linked above and below to constitute said part in the form of a closed loop (14).

3. Apparatus according to Claim 2 characterized in that the first means for providing a magnetic field comprises at least one electromagnet (24, 26) surrounding each of the conduits (16, 18).

4. Apparatus according to Claim 1 characterized in that the circuit (110) in which the fluid (112) circulates comprises, over a part of its length, two conduits (116, 118) opening at the top into the bottom of a reservoir (111), the conduits being linked below to constitute, with the reservoir, the said part in the form of a closed loop.

5. Apparatus according to Claim 4 characterized in that the conduits (116, 118) are linked below by a third conduit connected with the remainder of the circuit (110), and in that the first means providing a magnetic field comprises an electro-magnet (124) surrounding the third conduit at the level at which it is connected to the remainder of the circuit.

6. Apparatus according to any one of Claims 2 to 5 characterized in that a primary coil of the transformer (20, 22, 120, 122) is disposed around at least one of the conduits (16, 18, 116, 118) whereby to induce in the fluid (12, 112) an electrical current density ($\vec{J}$) completed in the part in the form of a closed loop.

7. Apparatus according to any one of the preceding Claims characterized in that the fluid circulation is at least partially caused by the electromagnetic force ($\vec{G}$) resulting from the combined effect of the magnetic field ($\vec{B}$) and the electrical current ($\vec{J}$).

8. Apparatus according to any one of the preceding Claims characterized in that the circuit comprises at least one branch (28, 30, 128) for removing the inclusions (13, 113), said branch being located in the part in the form of a closed loop at the level of the first means (24, 26, 124) for providing a magnetic field ($\vec{B}$).

9. Apparatus according to Claim 8 characterized in that the branch (28, 30, 128) leads to a detachable receiver (32).

FIG.1

FIG.2